**Europäisches Patentamt**

**European Patent Office**

**Office européen des brevets**

(19)

(11) Veröffentlichungsnummer: **0 301 568**

**A2**

(12) # EUROPÄISCHE PATENTANMELDUNG

(21) Anmeldenummer: **88112315.2**

(22) Anmeldetag: **29.07.88**

(51) Int. Cl.⁴: **G05D 7/06**

(30) Priorität: **30.07.87 DE 3725312**

(43) Veröffentlichungstag der Anmeldung:
**01.02.89 Patentblatt 89/05**

(84) Benannte Vertragsstaaten:
**CH DE FR GB LI NL**

(71) Anmelder: **Hokynar, Jiri**
**Fraunhoferstrasse 11**
**D-8033 Martinsried(DE)**

(72) Erfinder: **Hokynar, Jiri**
**Fraunhoferstrasse 11**
**D-8033 Martinsried(DE)**

(74) Vertreter: **Geissler, Bernhard, Dr. jur.,**
**Dipl.-Phys. Patent- und Rechtsanwälte et al**
**Bardehle-Pagenberg-Dost-**
**Altenburg-Frohwitter-Geissler & Partner**
**Postfach 86 06 20**
**D-8000 München 86(DE)**

(54) **Steuergerät für Fluidfluss.**

(57) Ein Fluidfluß-Steuerungsgerät ist beschrieben, bei dem in einem Gehäuse ein Mikrocomputer angeordnet ist, der über eine Widerstandsmessung im Inneren des Gehäuses den Fluidfluß messen und über ein Schrittschaltgerät im Inneren des Gehäuses eine Steuerung und Kontrolle des Fluidflusses bewirken kann.

FIG 1

EP 0 301 568 A2

## Steuergerät für Fluidfluß

Die vorliegende Erfindung bezieht sich auf ein Steuergerät. Insbesondere bezieht sich die Erfindung auf ein Gasfluß-Steuergerat.

Bei vielen chemischen und physikalischen Verfahren muß der Fluß eines Fluids, insbesondere eines Gases, gesteuert und insbesondere auch über eine gegebene Zeit konstant gehalten werden. Häufig besteht das Erfordernis, den Fluß eines Fluids, wie beispielsweise eines Gases dahingehend zu steuern bzw. zu regeln, daß pro Zeiteinheit eine konstante Masse dieses Fluids, bzw. Gases zu einem Verbraucher fließt. Hierzuwurden bereits Geräte entwickelt, die ein Ventil in einer Gasleitung aufweisen, das aufgrund einer Messung des Gasflusses so eingestellt Wurde, daß der Gasfluß einen gewünschten Wert hat. Solche Geräte erforderten Kabelverbindungen von der Ventilsteuereinheit, z. B. zu einem Computer und zurück. Außerdem mußten die Geräte einzeln und in aufwendiger Weise geeicht werden. Eine Regelgenauigkeit besser als 1 Promille ließ sich nicht vernünftig erzielen.

Aufgabe der Erfindung ist es, ein Steuergerät für Fluidfluß zu schaffen, das die genannten Nachteile vermeidet. Insbesondere soll bei dem Gerät der Erfindung die Messung bzw. Bestimmung der Stellung des Ventils entfallen und das Gerät soll eine Regelgenauigkeit von 1 Promille oder besser haben.

Gelöst wird diese Aufgabe durch ein Gerät, wie es in den Ansprüchen definiert ist. Bevorzugte Ausführungsformen sind in den Unteransprüchen definiert und ergeben sich aus der folgenden ausführlichen Beschreibung sowie der Zeichnung in der

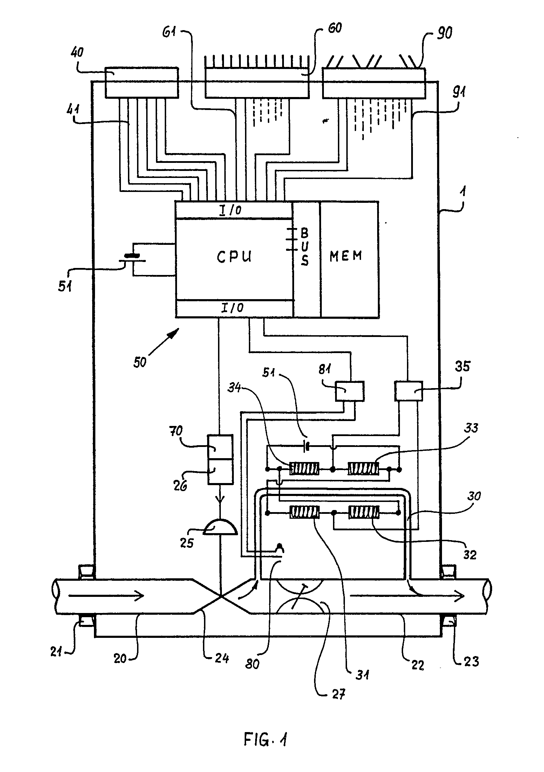

Fig. 1 eine schematische Schnittansicht durch das erfindungsgemäße Gerät zeigt,

Fig. 2 eine Ventilkennlinie darstellt, und

Fig 3 ein logisches Flußdiagramm für die Autokalibration.

Das erfindungsgemäße Gerät zum Steuern von Fluid-, insbesondere Gasfluß ist ein kompaktes Gerät. Sämtliche Einheiten einschließlich der Computersteuerung befinden sich innerhalb eines Gehäuses (1). Dieses Gehäuse ist vorzugsweise quaderförmig ausgebildet und besteht insbesondere aus Metallblech, wie beispielsweise Stahlblech.

Durch die eine Wand des Gehäuses (1) führt eine Zufuhröffnung (20) zu einem Zufuhrkanal (28). Vorzugsweise durch die gegenüberliegende Wand des Gehäuses führt ein Abführkanal (29) zu einer Abfuhröffnung (22). Der Zufuhrkanal, der Abfuhrkanal und der Raum zur Aufnahme eines zwischen beiden Kanälen angeordneten Ventils sind vorzugsweise in einem Basisblock (200) (z.B. Metallblock oder Kunststoffblock) ausgebildet.

Es ist bevorzugt, daß Zufuhr- und Abfuhröffnung in der Nähe des Gerätebodens an der linken bzw. rechten Seite des Gerätes angeordnet sind. Es sind Ansatzstücke (21 bzw. 23), z. B. Schraubverbindungen, zum Anschließen einer Fluidquelle an den Zufuhrkanal (28) und entsprechend zum Anschließen eines Fluidverbrauchers an den Abfuhrkanal (29) vorgesehen. Anstelle von Schraubverbindungen können auch andere Anschlüsse wie beispielsweise Flanschpaare mit Überwurfmuttern vorgesehen sein. In jeden Falle sind die Anschlußelemente so ausgebildet, daß ein Fluidverlust insbesondere ein Gasverlust durch diese Anschlüsse weitestgehend vermieden wird.

Zwischen der Zufuhrkanal (28) und dem Abfuhrkanal (29) ist innerhalb des Gehäuses (1) ein Steuerventil (24) angebracht. Dieses Steuerventil (24) weist eine mechanische Flußbegrenzungseinrichtung (25) auf und es ist ein Betätigungselement (26) zum Einstellen der Flußbegrenzungseinrichtungen vorgesehen. Dieses Steuerventil (24) ist vorzugsweise ein solches Ventil, das für seine Betätigung nicht von dem Einlaßdruck des fluiden Mediums in dem Zufuhrkanal (28) beeinflußt wird. Das Betätigungselement (26) zum Einstellen des Ventils bzw. der Flußbegrenzungseinrichtung (25) ist dabei vorzugsweise ein elektrischer Schrittschaltmotor (26). Dieser kann beispielsweise das Ventil über eine Anzahl von z. B. 5.000 bis 50.000 Stufen zwischen den zwei Anschlägen der Flußbegrenzungseinrichtung durchschalten.

Die Steuerung des Schrittschaltmotors (26) erfolgt durch einen Microcomputer (50). Die Spannungsquelle (51), vorzugsweise eine Batterie mit langer Lebensdauer, befindet sich ebenfalls im Inneren des Gehäuses (1). Die Steuerung erfolgt aufgrund von Daten, die in der Speichereinheit MEM. des Computers gespeichert werden und diesem z. T. von außen zugeführt wurden und die z. T. durch eine Messung im Inneren des Gehäuses (1) erzeugt wurden. Hierauf wird weiter unten noch näher eingegangen.

Die Messung des tatsächlichen Fluidflusses durch den Abfuhrkanal (29) erfolgt mit Hilfe einem Abschnitt des Abfuhrkanals (29) parallel geschalteten Meßrohrleitung (30). Dieser Meßrohrleitung (30) sind im Inneren des Gehäuses (1), aber außerhalb des Meßrohrkanals vorzugsweise vier Widerstände (31, 33 bzw. 32, 34) den jeweiligen Enden der Meßrohrstrecke zugeordnet. Die Erwärmung der Widerstände (31, 33; 32, 34) und damit deren Widerstandswert ist von der Menge des durch die Meßrohrstrecke (30) fließenden Fluids bzw. Gases abhängig. Daher kann, in an sich bekannter Weise, das Verhältnis der Widerstände als ein dem Massenfluß proportionaler Wert zur Regelung und zur Eichung verwendet werden.

Die vier Widerstände (31, 33 und 32, 34) sind zusammen mit einer Spannungsquelle (51), die dieselbe Spannungsquelle wie die für den Betrieb des Microcomputers (50) sein kann, aber nicht sein muß, vorzugsweise in eine Voll-Brückenschaltung geschaltet. Die Diagonalspannung ist dem Verhältnis der Widerstandswerte der Widerstände (31, 33 und 32, 34) proportional. Diese Spannung wird über einen A/D-Wandler (35) und die Input/Output-Einheit des Microcomputers (50) diesem zur weiteren Verarbeitung zugeführt.

Der Zufuhrkanal (20) und der Abfuhrkanal (22) können, statt in einem Block ausgebildet zu sein, auch aus üblichem Rohrmaterial, insbesondere rostfreiem Stahl bestehen. Falls das Gerät für besondere, beispielsweise korrosive Gase eingesetzt wird, kommen entsprechend chemisch beständige Rohrmaterialien zum Einsatz. Auch die Meßrohrleitung (30) besteht aus entsprechend chemisch widerstandsfähigem Material, beispielsweise rostfreiem Stahl.

Um eine noch präzisere Steuerung bzw. Regelung des Gasflusses zu ermöglichen, ist vorzugsweise bei dem erfindungsgemäßen Gerät ein Temperaturfühler (80) in dem isothermen Bereich der Meßstrecke, nahe bei dem Meßrohr (30) vorgesehen. Mit Hilfe eines A/D-Wandlers (81) wird ein der Temperaturabweichung von der Solltemperatur entsprechendes digitales Signal über die Input/Output-Einheit an den Computer weitergegeben.

Vorzugsweise erfolgt bei dem erfindungsgemäßen Gerät eine Temperatur-Kompensation automatisch aufgrund von im Computer gespeicherten, Gerät-spezifischen Werten. Diese Werte für die Korrektur werden dadurch erhalten, daß das Gerät bei mindestens zwei verschiedenen Temperaturen (z.B. 20°C und 40°C) in einem Klimaschrank gehalten wird und die entsprechenden, Meßwerte (z.B. die durch Unsymmetrie, Thermospannungen, temperaturabhängige Änderung der analogen Teile der Elektronik etc. bedingten Driftweite an der Brücke) bei diesen beiden Temperaturen erfaßt und dem entsprechende erste Zahlen gespeichert werden; die von dem Temperaturfühler erzeugten Temperatursignale für die entsprechenden Temperaturen werden ebenfalls erfaßt und als diesen Temperaturen zugeordnete zweite Zahlen gleichsam als Tabelle gespeichert. Im Betrieb erfolgt dann über den Computer automatisch eine Korrektur aufgrund des für das gerade vorliegende Temperatursignal berechneten zweiten Zahlenwertes; im einfachsten Falle erfolgt die Berechnung durch lineare Interpolation aus den Tabellenwerten.

Eine weitere Verbesserung der Nutzvielfalt und Meßgenauigkeit des erfindungsgemäßen Geräts läßt sich erzielen, wenn innerhalb des Gehäuses (1) ein Druckfühler (10) vorgesehen ist. Dieser Druckfühler (10) kann an der Stelle (11) dem Atmosphärendruck im Gehäuse (1) messen oder er kann an der Stelle (12) den Druck in dem Zufuhrkanal (28) messen. Der gemessene Wert des Druckes wird dann in einem A/D-Wandler (13) in ein digitales Signal umgesetzt, das über die I/O-Einheit dem Computer zugeführt wird.

Auch für die Druckkompensation ist erfindungsgemäß vorzugsweise in dem Computer eine Tabelle abgelegt (gespeichert), die mindestens zwei erste (Druck-)Zahlenwerte, die den Druckfühler-Meßwerten zugeordnet sind, und zwei zu diesen gehörende zweite (Fluß-)Zahlenwerte enthält, die den entsprechenden Meßwerten des Sensors zugeordnet sind. Diese ersten und zweiten Zahlenwerte werden ähnlich wie bei der Temperaturkompensation erzeugt. Es werden z.B. die Sensorwerte erfaßt und entsprechende zweite (Fluß-) Zahlenwerte gespeichert, die sich bei gleicher Ventilstellung und unterschiedlichen Differenzdrücken über das Gerät ergeben. Diese Druckkompensations-Tabelle im Computer erlaubt eine vorbeugende, schnelle Regelung im Falle von Druckdifferenzänderungen, und man muß nicht auf das Ansprechen des Sensors warten.

An der Wand des Gehäuses (1), und zwar vorzugsweise an der der Bodenseite gegenüberliegenden Stirnseite des Gehäuses (1), sind eine Anzeigeeinheit (40) sowie ein Mehrfachstecker (60) angebracht. Bei einer bevorzugten Ausführungsform ist auch noch ein Mehrfachschalter (90) in der Wand des Gehäuses (1) angebracht. Die Anzeige (40) ist vorzugsweise eine LED-Anzeige. Ein anderes Beispiel für eine solche Anzeige ist eine Flüssigkristallanzeige. Die Anzeigeeinheit (40) ist über ihre Anschlußleitungen (41) in an sich bekannter Weise mit der Input/Output-Einheit des Computers (50) verbunden und zeigt je nach Programmstufe die betreffenden Werte des Betriebes des Gerätes, also insbesondere den augenblicklichen Fluß durch die Öffnung (22) an.

Über den Vielfachstecker (60), der mit seinen Anschlußleitungen (61) ebenfalls mit der Input/Output-Einheit des Computers (50) verbunden ist kann, verschiedenartige Informationen in den Computer (50) von außen eingebracht werden. Dies geschieht mit Hilfe eines umgekehrten Anschlußsteckers und i. d. R. von einem anderen Computer aus, z. B. einem Zentralcomputer. Auf diese Weise kann z. B. die Steuerung durch den Computer (50) durch Befehle von einem Zentralcomputer modifiziert werden.

Der Mehrfachschalter (90) ist mit seinen Anschlußleitungen (91) ebenfalls an die Input/Output-Einheit des Computers (50) angeschlossen, Dieser Mehrfachschalter (90) erlaubt es, z. B. verschiedene Anzeigen (Grad Celsius oder Grad Fahrenheit, unterschiedliche Flußeinheiten etc.) anzuzeigen, oder unterschiedliche Steuerprogramme einzustellen, oder das Gerät für unterschiedliche Gase einzustellen. Es ist auch möglich, über den Vielfachschalter (90) den Sollwert für den Fluidfluß, z. B. den Gasfluß in der Leitung (22) zum Verbraucher vorzugeben.

Mit dem erfindungsgemäßen Gerät konnte eine Genauigkeit der Steuerung von Gasfluß durch die Abfuhrleitung (22) erzielt werden, die besser als 1 Promille war. Außerdem ist es möglich, das erfindungsgemäße Gerät zu kalibrieren, und zwar mit Hilfe eines weiteren solchen Geräts. Der Computer (50) wird dabei für die Kalibrierphase derart programmiert, daß er die gesamte mechanische Strecke des Ventils (24) durchfahren läßt, dabei mit angeschlossener Fluidquelle die Änderung des Widerstandsverhältnisses der Widerstände (32, 34 und 31, 33) mißt, speichert und dann überprüft, ob zwischen den Flußwerten von 5 Promille und von 95 Promille eine ausreichende Mindestanzahl von z. B. 9.600 Schrittschaltstufen des Schrittschaltmotors (26) lagen. Typischerweise wird je nach Bedarf diese Mindestanzahl für die Schrittschaltstufen des Regelbereichs zwischen 500 und 50.000 liegen. Falls die Anzahl der Stufen zu klein war, wird der Computer (50) eine Anzeige liefern, daß das Gerät fehlerhaft ist.

Wenn die Anzahl der Stufen besser als das Minimum ist, so steht der Regelbereich innerhalb der Speicher des Computers (50) fest. Damit steht auch fest, welche Anzahl von Schaltschritten des Schrittschaltmotors (26) erforderlich ist, um eine bestimmte Flußänderung zu erzeugen.

Im einzelnen erfolgt die bevorzugte Autokalibration des Gerätes wie folgt:

Der im Ventil eingebaute Sensor zur Messung des Gasdurchflusses liefert kein absolutes, dem Durchfluß entsprechendes Signal. Vielmehr ein relatives Durchflußverhältnis, je nach Bypass und Sensor. Diesem relativen Signal muß der tatsächliche Durchflußwert zugeordnet werden.

Diese Zuordnung der Durchflußwerte, auch Referenzuwerte genannt, erfolgt während der Autokalibration. An diskreten Ventilpositionen, die nacheinander automatisch eingestellt werden, wird dem Sensorsignal der entsprechende Durchflußwert zugeordnet. Zwischenwerte des Durchflusses können dann, mit hinreichender Genauigkeit, interpoliert werden. Die Referenzwerte müssen von einem Standardgerät oder über die Fernbedienung eingegeben werden.

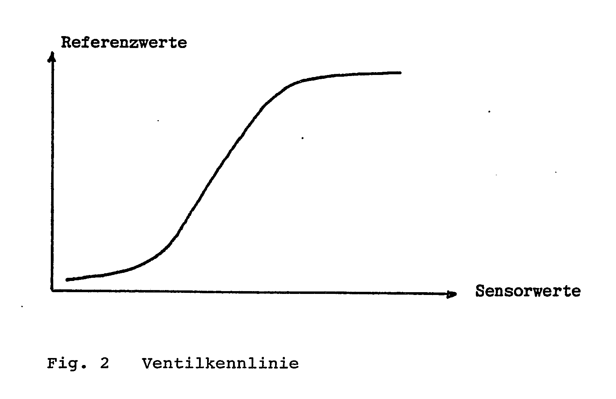

Das Resultat der Autokalibration ist also eine Kennlinie (vgl. Fig. 2), auf deren einen Achse die Sensorwerte, auf der an deren die Referenz- oder Durchflußwerte aufgetragen sind. Die Durchflußwerte dund die Sensorwerte werden in dem Speicher des Steuer-Rechners gespeichert.

In der Berechnung der Durchflüsse über diese Kennlinie werden die Ventil- und Sensornichtlinearität, sowie Offsets aus der Meßschaltung automatisch berücksichtigt.

Der mechanisch mögliche Stellweg des Ventils ist wesentlich größer als der wirksame Stellweg, in dem der Gasfluß tatsächlich beeinflußt wird. Letzter hängt vom Druck und der Gasart ab.

Außerhalb des wirksamen Bereiches ist eine Regelung sinnlos, es kann der Gasstrom ja nicht beeinflußt werden. Der wirksame Stellweg ist definiert als Bereich zwischen 5 und 95 % des maximalen Durchflusses. Die erste Aufgabe der Autokalibration ist es nun, diesen wirksamen Stellbereich zu ermitteln. Dazu wird das Ventil geöffnet und der Meßwert eingelesen. Anschließend schließt das Ventil und es wird der Meßwert des Leckflusses ermittelt. Aus der der Differenz zwischen Meßwert (offen) und Meßwert wird die untere Bereichsgrenze mit 5 % und die obere Bereichsgrenze mit 95 % automatisch berechnet.

Von der geschlossenen Ventilposition aus wird nun der Stellbereich automatisch abgefahren. An äquidistanten Stellen wird der Meßwert erst mit dem Meßwert (zu), dann mit dem Meßwert (offen) verglichen. Damit werden die Grenzen des wirksamen Stellweges automatisch ermittelt.

Die Differenz der Grenzpositionen wird durch 15 dividiert. Mit dem Resultat lassen sich die Positionen der 16 Stützstellen berechnen. An diesen erfolgt dann die Zuordnung Meßwert zu Referenzwert.

Sind die Positionen der 16 Stützstellen bekannt, schließt das Ventil vorzugsweise und fährt dann den 1. Stützpunkt an. Das vorhergehende Schließen schaltet den Effekt des Getriebespiels aus. Am 1. Stützpunkt wird nun automatisch der Meßwert eingelesen und anschließend nach dem Referenzwert gefragt. Jetzt muß der tatsächliche Gasfluß mit einer Apparatur gemessen werden. Dieser wird über das Terminal eingegeben. Die Messung des 1. Stützpunktes ist beendet. Es folgen die weiteren in derselben Weise.

Sind alle Stützpunkte gemessen, schließt das Ventil, um unnützen Gasverbrauch zu vermeiden. Dann erfolgt die Skalierung der eingegebenen Werte für die interne Zahlendarstellung. Diese Normierung ist vorzugsweise so festgelegt, daß 100 % Durchfluß dem internen Zahlenwert von 4096 entsprechen. Das Programm fragt also nach dem Zahlenwert der 100 % entspricht. Nach der Eingabe werden die Referenzwerte skaliert und der Status der Kalibrationsdaten auf gültig gesetzt. Im folgenden werden die 100 %-Werte aller weiteren, nicht umrechenbaren Dimensionen abgefragt. Dies, um die Konversion von der internen Darstellung zu dimensionsbehafteten Ausgaben und umgekehrt zu ermöglichen. Wird bei einer bestimmten Dimension kein 100 %-Wert eingegeben, sondern nur ein Carriage Return, kann keine Ein- bzw. Ausgabe in dieser Dimension während des Regelbetriebes erfolgen. In der Anzeige erscheint dann 0.

Sind alle 100 %-Werte spezifiziert, ist die Autokalibration beendet.

Die Gasart und Dimension muß vor dem Start der Autokalibration gewählt werden. Ein Ändern während des Ablaufes wirkt sich nicht aus.

Es ist darauf zu achten daß konstante Druckverhältnisse über dem Gerät herrschen. Wird mit einem Standard kalibriert, muß dieser vor dem zu kalibrierenden Gerät in den Gasfluß eingeschlossen werden. Eine Kalibration mit dem Standard kann nur in Promille erfolgen.

Das Sensorsignal ist proportional zur Masse des Gases, das durch das Kapillarrohr fließt. Bei konstantem Durchfluß ändert sich also die Sensorspannung mit dem Gas, d. h. die Kennlinie besitzt für jedes Gas eine eigene Steigung.

Um die spezifizierte Genauigkeit zu gewährleisten, ist es bevorzugt, das Sensorsignal dem Eingangsspannungsbereich des Analog-Digital-Konverters (ADC) anzupassen. Soll der maximale Durchfluß z.B. 1,2 1/min betragen, wird der Bypass so eingestellt, daß bei diesem Durchfluß die maximale Eingangsspannung am ADC anliegt.

Diese Einstellung ist für jedes Gas verschieden. Das Gerät ist deshalb durch die Autokalibration nur für ein Gas, das Hauptgas, optimal eingestellt. Die restlichen drei möglichen Gase sind, entsprechend ihrem Verhältnis der Massenzahlen zum Hauptgas, fehlangepaßt.

Besitzt das Nebengas eine kleinere Massenzahl als das Hauptgas, wird weniger Wärme abtransportiert. Die Sensorspannung wird kleiner bei demselben Durchfluß. Dies kann so weit führen, daß die Differenz der digitalisierten Sensorspannung, zwischen maximalem und minimalem Durchfluß, weniger als 1000 Inkremente beträgt. In diesem Falle ist die spezifizierte Genauigkeit nicht mehr gewährleistet.

Auf der anderen Seite, wenn das Nebengas eine größere Masse besitzt als das Hauptgas, wird mehr Wärme abtransportiert. Die Sensorspannung steigt bei demselben Durchfluß. Der Eingangsspannungsbereich des ADC wird zwar voll ausgenutzt, aber der Stellweg des Ventils, zwischen minimal und maximal meßbarem Durchfluß, ist zu klein. Die Auflösung des Stellgliedes ist zu gering.

Das Gerät erkennt obige Fehler während des Ablaufes der Autokalibration. Sie wird deshalb nicht gestoppt, jedoch ist ein späterer Regelbetrieb mit diesem Gas nur mit entsprechend verminderter Genauigkeit möglich.

Die Einstellung des Bypass-Sensorverhältnisses auf eine bestimmte Gasart erfolgt im Herstellungswerk.

Die Referenzwerte müssen in der vorgewählten Dimension eingegeben werden. Gültige Werte in den Dimensionen 1/min, ccm/min und mol/h umfassen den Zahlenbereich von 0,001 bis 999,999.

Die Referenzwerte in Integers liegen vorzugsweise im Zahlenbereich von 0 bis 32000.

Wichtig ist, daß das Verhältnis zwischen den Referenzwerten demjenigen der Durchflüsse entspricht. Die absoluten Werte spielen keine Rolle, sie müssen nur innerhalb des erlaubten Zahlungsbereiches liegen. Der absolute Bezug wird dann durch die 100 % Eingaben hergestellt.

Während der Kalibration können Fehler auftreten. Je nach Gewicht führen sie zum Abbruch oder zur Signalisation eines bestimmten Zustandes.

Eine Fehlanpassung des Bypass-Sensorverhältnisses oder Unter- bzw. Überdruck führen zu einer Fehlanpassung an den Eingangsspannungsbereich des ADC. Ist die Spannung bei maximalem Durchfluß über 5V, erfolgt die Fehlermeldung E7. Die Kalibration wird aber fortgeführt.

Um die Regelgenauigkeit von 1 Promille zu gewährleisten muß die digitalisierte Eingangsspannungsdifferenz zwischen der unteren und oberen Bereichsgrenze größer als 1000 Inkremente sein. Ist dies nicht der Fall, erfolgt die Fehlermeldung E5. Die Kalibration wird aber fortgeführt.

Ebenso muß der Stellbereich zwischen den Bereichsgrenzen größer als 1000 Schritte sein. Ist dies nicht der Fall, erfolgt die Fehlermeldung E4. Die Kalibration wird aber fortgeführt.

Ist kein Gasfluß vorhanden, erfolgt die Fehlermeldung E3. Die Kalibration wird abgebrochen.

Der angegebenen 100 %-Wert ist zu klein. Die skalierten Referenzwerte übersteigen den internen Darstellungsbereich. Es erfolgt die Fehlermeldung E6.

Alle auftretenden Fehler werden am Ende der Kalibration im Gerätedisplay zyklisch angezeigt. Sie kann nur mit dem Befehl 10, Abbruch der Autokalibration, verlassen werden. Nach dem Abbruch werden die Fehler nicht mehr angezeigt.

Die Fehler E3 und E6 führen zum Abbruch der Kalibration. Es werden keine gültigen Daten aufgenommen. Nach Verlassen der Fehleranzeige im Gerätedisplay wird der Fehler E8 in der Statuszeile angezeigt. Sollwert, Istwert und die Alarmwerte sind dann 0. Eine Regelung ist nicht möglich.

Zusammenfassend erfolgt die Autokalibration des Gerätes also wie folgt:

(1) Automatische Feststellung des wirksamen Stellweges durch

(a) Durchfahren des mechanisch möglichen Stellweges, dabei Ermittlung des Leckflusses und des vollen Flusses,

(b) Ermittlung des Anfangs- und Endpunktes des wirksamen Stellweges aufgrund vorgegebener Minimal-(z.B. 5 %) und Maximal- (z.B. 95 %) Flußwerte, wobei sich die Prozentsätze auf die Differenz zwischen vollem Fluß (Ventil ganz offen) und Leckfluß (Ventil ganz geschlossen) als 100 % beziehen.

(2) Automatische Unterteilung des wirksamen Stellweges in eine Anzahl von Stützstellen, vorzugsweise 5 - 50 solcher Stützstellen, insbesondere etwa 15 Stützstellen,

(3) Anfahren der Stützstellen des wirksamen Stellweges, vorzugsweise von der geschlossenen Ventilposition aus und Feststellung des Sensorwertes (vorzugsweise digital) des Gerätes und des tatsächlichen Gasflusses (ebenfalls vorzugsweise digital und durch ein Eichgerät, ggf. gleichen Aufbaus wie das zu kalibrierende Gerät),

(4) Speichern der Wertepaare in dem internen Speicher des Gerätes, ggf. nach einer Normierung (z.B. indem 100 % die Zahl 4096 = hexadezimal 1000 zugeordnet wird).

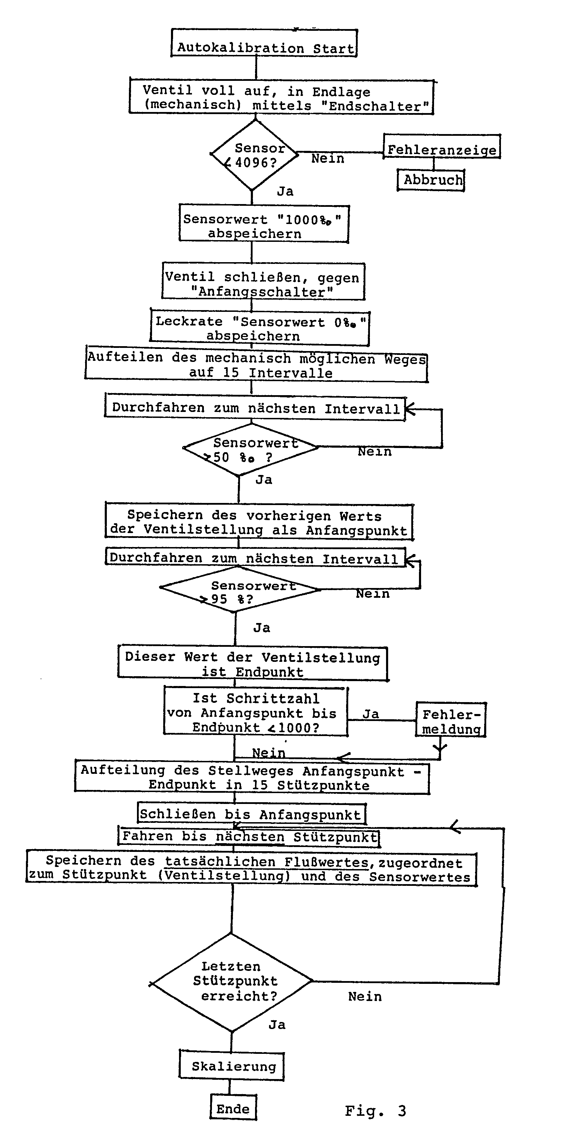

Die Autokalibration erfolgt automatisch. Im Betrieb des Gerätes ist eine Erfassung der Ventilstellung zwar überflüssig, wird jedoch vorzugsweise auch erfaßt und, beispielsweise in Form der Anzahl der Schaltschritte eines Schrittmotors, zu einem bestimmten Stützpunkt gespeichert; die Voreinstellung erfolgt dann vorzugsweise und schnell über die Ventilstellung. Die automatische Regulierung bzw. Feinregulierung des Gasflusses erfolgt aufgrund der Einregelung der Ventilstellung auf den betreffenden Sensorwert. Die Ventilpositionen des effektiven Stellweges (auch vorzugsweise als digitale Werte) für die Anfangs- und Endpositionen des Regelweges eines Schrittschaltmotors werden gespeichert. In Fig. 3 ist die Autokalibration als logisches Flußschema dargestellt.

Bei der bevorzugten Ausführungsform wird ein Ventil (24) eingesetzt, das bei einem Versagen der Steuerung stehen bleibt und nicht automatisch schließt. Ein unabhängig davon arbeitendes Sicherheitsventil kann in der Leitung zum Verbraucher, oder auch innerhalb des Gehäuses (1) zusätzlich vorgesehen sein. Diese Art von Ventil hat den Vorteil, daß bei Ausfall der Regelung eine Fortsetzung des Betriebes unter Aufrechterhaltung des bisherigen Flusses (bei unveränderter Fluidquelle) möglich bleibt.

Ein weiterer Vorteil des erfindungsgemäßen Gerätes besteht in der außerordentlich hohen Kalibriergeschwindigkeit. Das erfindungsgemäße geeichte Gerät kann in unter einer Stunde ein weiteres solches Gerät kalibrieren, und das bei einer Meß- und Regelgenauigkeit von 1 Promille oder besser.

## Ansprüche

1. Fluidfluß-Steuergerät, **gekennzeichnet durch**

a) ein Gehäuse (1)

b) eine in das Gerät führende Zufuhröffnung (20), mit daran anschließendem Zufuhrkanal (28),

c) einen an der Zufuhröffnung (20) angebrachten ersten Rohrverbindungsanschluß (21) zum Anschluß einer Fluidquelle,

d) eine aus dem Gerät führende Abfuhröffnung (22) mit zu dieser führendem Abfuhrkanal (29),

e) einen an der Abfuhröffnung (22) angebrachten zweiten Rohrverbindungsanschluß (23) zum Anschluß eines Fluidverbrauchers,

f) ein im Gerät (1) zwischen Zufuhrkanal (28) und Abfuhrkanal (29) angebrachtes Steuerventil (24) mit einer mechanischen Flußbegrenzungseinrichtung (25) und einem Betätigungselement (26) zum Einstellen der Flußbegrenzungseinrichtung,

g) einen in dem Gehäuse (1) angeordneten Microcomputer (50) mit

aa) einer zentralen Datenverarbeitungseinheit (CPU)

bb) einem Datenbus (BUS)

cc) zumindest einem Datenspeicher (MEM.)

dd) Input/Output-Einheiten zum Verarbeiten von Daten von außen für die zentrale Datenverarbeitungseinheit und zum Umwandeln von Informationen von der zentralen Datenverarbeitungseinheit in Signale für periphere Anschlußeinheiten,

wobei die zentrale Datenverarbeitungseinheit (CPU) mit dem Datenbus (BUS) und der Datenbus (BUS) mit den Datenspeichern (MEM.) in an sich bekannter Weise verbunden sind,

h) eine Meßrohrleitung (30), die einem Abschnitt des Abfuhrkanals (29) parallel geschaltet ist und im Inneren des Gerätes (1) angeordnet ist,

i) zumindest einen ersten Widerstand (31, 34), der im Inneren des Gehäuses außen an der Meßrohrleitung (30) im Bereich von deren erstem Ende angeordnet ist,

j) zumindest einen zweiten Widerstand (32, 33), der in dem Gehäuse außen an der Meßrohrleitung (30) im Bereich von deren zweitem Ende angeordnet ist, wobei der erste und der zweite Widerstand (31, 34; 32, 33) in einer Vergleichsschaltung miteinander verbunden sind, deren Ausgang eine dem Verhältnis der jeweiligen Widerstände entsprechende Spannung führen kann,

k) einen mit dem Ausgang der Vergleichsschaltung verbundenen A/D-Wandler, dessen Ausgang mit einer Input/Output-Einheit des Microcomputers (50) verbunden ist,

l) einer so an der Wand des Gehäuses (1) befestigten optischen Anzeigeeinheit (40), daß die Anzeige von außen lesbar ist, wobei die Anschlüsse (41) der Anzeigeeinheit (40) mit einer Input/Output-Einheit des Microcomputers (50) verbunden sind,

m) einen so an der Wand des Gehäuses (1) befestigten Mehrfachstecker (60), daß ein entsprechender umgekehrter Stecker von außen an diesen gesteckt werden kann, wobei die Verbindungsleitungen (61) des Mehrfachsteckers mit einer Input/Output-Einheit des Microcomputers (50) verbunden sind,

n) ein Schrittschaltgerät (70), das im Inneren des Gehäuses angeordnet und mit seinem Eingang mit einer Input/Output-Einheit des Microcomputers verbunden ist und mit seinem Ausgang mit dem Betätigungselement (26) derart verbunden ist, daß die durch die Input/Output-Einheit des Microcomputers (50) abgegebenen Signale zu einer entsprechenden Betätigung der Flußbegrenzungseinrichtung (25) durch das Betätigunselement (26) führt.

2. Gerät nach Anspruch 1, gekennzeichnet durch

(o) einen bei der Meßstrecke der Meßrohrleitung (30) im Inneren des Gehäuses angeordneten Temperaturfühler (80), der in thermischem Kontakt mit der Meßrohrleitung (30) steht,

p) einen A/D-Wandler, dessen Eingang mit dem Temperaturfühler (30) verbunden ist und dessen Ausgang mit einem Eingang des Microcomputers verbunden ist.

3. Gerät nach Anspruch 1 oder 2, gekennzeichnet weiterhin durch einen von außen durch eine Öffnung im Gehäuse (1) auswechselbaren Einsatz (27) in dem Abfuhrkanal (29).

4. Gerät nach Anspruch 3, dadurch gekennzeichnet, daß der auswechselbare Einsatz (27) in Flußrichtung nach der Flußbegrenzungseinrichtung und zwischen den Abzweigungsstellen der Meßrohrleitung (30) angeordnet ist.

5. Gerät nach einem der Ansprüche 1 bis 4 gekennzeichnet durch einen an der Wand des Gehäuses (1) befestigten Mehrfachschalter (90), dessen Anschlüsse (91) mit Eingängen des Microcomputers (50) verbunden sind.

6. Gerät nach einem der vorhergehenden Ansprüche, dadurch gekennzeichnet, daß der Mehrfachstecker (60) und die Anzeigeeinheit (40) sowie ggfl. der Mehrfachschalter (90) an derselben Wand des Gehäuses (1) angeordnet sind.

7. Gerät nach Anspruch 6, dadurch gekennzeichnet,

daß das Gehäuse (1) quaderförmig ausgebildet ist, wobei der Quader eine Bodenseite und eine dieser gegenüberliegende Stirnseite aufweist,

daß die Zufuhröffnung und die Abfuhröffnung durch die linke bzw. rechte Wand des Gehäuses (1) in der Nähe von dessen Bodenseite verlaufen, und

daß der Mehrfachstecker (60), die Anzeigeeinheit (40) sowie ggfl. der Mehrfachschalter (90) an der Stirnseite des Gehäuses angeordnet sind.

8. Gerät nach einem der vorhergehenden Ansprüche, dadurch gekennzeichnet,

daß die Meßrohrleitung (30) eine Zugangsöffnung hat, die durch eine im Betrieb des Gerätes geschlossene Öffnung in der Wand des Gehäuses zugänglich ist, wobei diese Zugangsöffnung eine Reinigung der Meßrohrleitung erlaubt, und daß ein Verschluß die Zugangsöffnung der Meßrohrleitung ,im Betrieb des Gerätes dicht verschließt.

9. Gerät nach einem der vorhergehenden Ansprüche, dadurch gekennzeichnet, daß der Zufuhrkanal (28) und der Abfuhrkanal (29) sowie ein Aufnahmebereich für das Steuerventil (24) in einem Basisblock (200) ausgebildet sind.

10. Gerät nach einem der vorhergehenden Ansprüche, dadurch gekennzeichnet, daß zwei erste Widerstände (31, 34) an der Meßrohrleitung (30) und deren Zuflußendabschnitt zugeordnet vorgesehen sind, daß zwei zweite Widerstände (32, 33) an der Meßrohrleitung (30) und deren Abfuhrabschnitt zugeordnet vorgesehen sind, und daß die vier Widerstände zu einer Voll-Brückenschaltung unter Abgleich von durch Unsymmetrie bedingten Fehlern geschaltet sind.

11. Fluidfluß-Steuergerät, gekennzeichnet durch

a) ein Gehäuse (1)

b) eine in das Gerät führende Zufuhröffnung (20), mit daran anschließendem Zufuhrkanal (28),

c) einen an der Zufuhröffnung (20) angebrachten ersten Rohrverbindungsanschluß (21) zum Anschluß einer Fluidquelle,

d) eine aus dem Gerät führende Abfuhröffnung (22) mit zu dieser führendem Abfuhrkanal (29),

e) einen an der Abfuhröffnung (22) angebrachten zweiten Rohrverbindungsanschluß (23) zum Anschluß eines Fluidverbrauchers,

f) ein im Gerät (1) zwischen Zufuhrkanal (28) und Abfuhrkanal (29) angebrachtes Steuerventil (24) mit einer mechanischen Flußbegrenzungseinrichtung (25) und einem Betätigungselement (26) zum Einstellen der Flußbegrenzungseinrichtung,

g) eine Meßeinrichtung, die derart ausgebildet und in dem Gerät angeordnet ist, daß sie ein ein-eindeutig den Gasfluß zwischen Zufuhröffnung und Abfuhröffnung zuzuordnendes Signal erzeugt,

h) einen Computer, der derart ausgebildet und mit dem Gerät verbunden ist, daß dieser eine Autokalibration des Gerätes durchfüren kann, indem durch den Computer gesteuert

aa) innerhalb des mechanisch möglichen Stellweges der mechanischen Flußbegrenzungseinrichtung deren wirksamer Stellweg ermittelt wird,

bb) die mechanische Flußbegrenzungseinrichtung gesteuert in eine Mehrzahl von Stützpunkten auf diesem wirksamen Stellweg gefahren wird,

cc) an jedem dieser Stützpunkte aus dem Signal der Meßeinrichtung ein dem Signal zugeordneter Wert (Sensor-Wert) automatisch gespeichert wird und auch ein dem tatsächlichen Gasfluß an diesem Stützpunkt entsprechender Wert (Fluß-Wert) automatisch gespeichert wird, so daß in dem Speicher dem Signal der Meßeinrichtung entsprechende Sensorwerte und diesen zugeordnete, dem Gasfluß entsprechende Fluß-Werte gespeichert sind.

FIG. 1

Fig. 2    Ventilkennlinie

```
                    ┌─────────────────────────┐
                    │  Autokalibration Start  │
                    └────────────┬────────────┘
                    ┌────────────┴────────────┐
                    │ Ventil voll auf, in Endlage │
                    │ (mechanisch) mittels "Endschalter" │
                    └────────────┬────────────┘
                          ◇ Sensor              ┌──────────────────┐
                        ◇ < 4096? ◇───Nein───── │  Fehleranzeige   │
                          ◇                      └────────┬─────────┘
                            │Ja                  ┌────────┴─────────┐
                    ┌───────┴─────────┐          │     Abbruch      │
                    │ Sensorwert "1000‰" │        └──────────────────┘
                    │   abspeichern   │
                    └───────┬─────────┘
                    ┌───────┴─────────┐
                    │ Ventil schließen, gegen │
                    │  "Anfangsschalter"  │
                    └───────┬─────────┘
                    ┌───────┴─────────┐
                    │ Leckrate "Sensorwert 0‰" │
                    │    abspeichern   │
                    └───────┬─────────┘
              ┌─────────────┴─────────────────┐
              │ Aufteilen des mechanisch möglichen Weges │
              │        auf 15 Intervalle       │
              └─────────────┬─────────────────┘
              ┌─────────────┴─────────────────┐
              │ Durchfahren zum nächsten Intervall │◄──┐
              └─────────────┬─────────────────┘   │
                      ◇ Sensorwert                  │
                    ◇ > 50 ‰ ? ◇────Nein───────────┘
                      ◇
                        │Ja
              ┌─────────┴──────────────┐
              │ Speichern des vorherigen Werts │
              │ der Ventilstellung als Anfangspunkt │
              └─────────┬──────────────┘
              ┌─────────┴──────────────┐
              │ Durchfahren zum nächsten Intervall │◄──┐
              └─────────┬──────────────┘   │
                      ◇ Sensorwert                  │
                    ◇ > 95 %? ◇─────Nein────────────┘
                      ◇
                        │Ja
              ┌─────────┴──────────────┐
              │ Dieser Wert der Ventilstellung │
              │      ist Endpunkt      │
              └─────────┬──────────────┘
              ┌─────────┴──────────────┐      ┌──────────┐
              │ Ist Schrittzahl        │      │ Fehler-  │
              │ von Anfangspunkt bis   │─Ja──│ meldung  │
              │ Endpunkt < 1000?       │      └────┬─────┘
              └─────────┬──────────────┘           │
                        │Nein          ◄───────────┘
            ┌───────────┴───────────────┐
            │ Aufteilung des Stellweges Anfangspunkt - │
            │ Endpunkt in 15 Stützpunkte │
            └───────────┬───────────────┘
            ┌───────────┴───────────────┐
            │ Schließen bis Anfangspunkt │
            └───────────┬───────────────┘
            ┌───────────┴───────────────┐
            │ Fahren bis nächsten Stützpunkt │◄──┐
            └───────────┬───────────────┘   │
    ┌───────────────────┴──────────────────────┐ │
    │ Speichern des tatsächlichen Flußwertes, zugeordnet │
    │ zum Stützpunkt (Ventilstellung) und des Sensorwertes │
    └───────────────────┬──────────────────────┘
                  ◇ Letzten                       │
                ◇ Stützpunkt ◇──────Nein──────────┘
                ◇ erreicht?
                  ◇
                    │Ja
            ┌───────┴────────┐
            │   Skalierung   │
            └───────┬────────┘
            ┌───────┴────────┐
            │     Ende       │         Fig. 3
            └────────────────┘
```